# EUROPEAN PATENT APPLICATION

(11) **EP 4 772 324 A1**
(43) Date of publication of application: **08.07.2026**
(21) Application number: 24857470.9
(22) Date of filing: 11.06.2024
(51) Int. Cl.: B29C 43/36, B29C 43/18, B29C 43/34, B29C 45/03, B29C 45/76

(54) **COMPRESSION MOLDING DEVICE AND COMPRESSION MOLDING METHOD**

(30) Priority: 28.08.2023 JP 2023137966
(71) Applicant: Yamaha Robotics Co., Ltd., Musashimurayama-shi, Tokyo 208-8585 (JP)
(72) Inventor: FUJISAWA, Masahiko, Chikuma-shi, Nagano 389-0898 (JP); KOBAYASHI, Hidemichi, Chikuma-shi, Nagano 389-0898 (JP); UEHARA, Koji, Chikuma-shi, Nagano 389-0898 (JP); YAMAMOTO, Osamu, Chikuma-shi, Nagano 389-0898 (JP)
(74) Representative: Becker, Eberhard
(86) International application number: PCT/JP2024/021116
(87) International publication number: WO 2025/047039

(57) **Abstract**

The present invention addresses the problem of providing a compression molding device and a compression molding method that can prevent the occurrence of molding defects caused by insufficient amount of resin or resin flow. As a solution, a compression molding device (1) according to the present invention that seals a workpiece (W) with a sealing resin (R) and processes the workpiece (W) into a molded product (Wp), comprises: a guard frame (44) that has a frame-like shape and is held at a predetermined position on the upper surface of the workpiece (W); a dispenser (42) that sprays a sealing resin (R) onto the upper surface of the workpiece (W) that is exposed in the frame of the guard frame (44); and a control unit (90) that controls the spraying operation of the dispenser (42) to the workpiece (W). The control unit (90) is configured to perform control so as to spray the sealing resin (R) onto a region, excluding a predetermined region near the guard frame, of the workpiece (W), and, previously or subsequently, spray the sealing resin (R) onto the predetermined region near the guard frame.

## Description

### Technical Field

The present invention relates to a compression molding device and a compression molding method.

### Related Art

As an example of a resin sealing device and a resin sealing method for sealing a workpiece with sealing resin and processing the same into a molded product, one using a compression molding method is known.

The compression molding method is a technology for resin sealing by supplying a predetermined amount of sealing resin to a sealing region (cavity) provided in a sealing mold configured to include an upper mold and a lower mold, placing a workpiece in the sealing region, and clamping with the upper mold and the lower mold (refer to Patent Document 1: Japanese Patent Application Laid-Open Publication No. 2015-128908). As an example, when using a sealing mold having a cavity provided in the upper mold, a technology for supplying sealing resin collectively to a central position on the workpiece and molding is known. On the other hand, when using a sealing mold having a cavity provided in the lower mold, a technology for supplying a release film (hereinafter, may be simply referred to as "film") covering the mold surface including the cavity and sealing resin and molding is known.

### Citation List

### Patent Documents

Patent Document 1: Japanese Patent Application Laid-Open (JP-A) No. 2015-128908.

### SUMMARY OF INVENTION

### Technical Problem

As described above, when performing so-called upper mold cavity type compression molding in which a workpiece is held in the lower mold and a cavity is provided in the upper mold, a method of spraying sealing resin (as an example, granular resin) onto the workpiece is widely adopted. Further, particularly when the workpiece is large such as at a panel level or a wafer level, a method of spraying sealing resin onto the exposed part of the workpiece while holding a frame-shaped guard frame on the upper surface of the workpiece is known. As a specific example, as described in Patent Document 1, a method of spraying by moving a dispenser that supplies sealing resin in parallel movement, reciprocating movement, rotational movement, or the like is known.

Here, when spraying sealing resin while holding the guard frame on the upper surface of the workpiece as described above, it was necessary to spray in a region smaller than (inside of) the molded product size. Thus, a shortage of resin amount tends to occur at the outer peripheral portion of the molded product, and also, the resin flow at the outer peripheral portion becomes larger compared to the central portion, both of which were causes of molding defects, particularly deterioration of flatness (TTV: Total Thickness Variation).

### Solution to Problem

The present invention has been made in view of the above circumstances, and an object thereof is to realize a compression molding device and a compression molding method capable of preventing occurrence of molding defects caused by shortage of resin amount or resin flow.

The present invention solves the above-described problems by means of solutions as described below as one embodiment.

A compression molding device according to one embodiment is a compression molding device that seals a workpiece with sealing resin and processes the workpiece into a molded product, and the compression molding device includes: a guard frame, having a frame-shaped and held at a predetermined position on an upper surface of the workpiece; a dispenser, configured to spray the sealing resin onto an upper surface of the workpiece exposed within a frame of the guard frame; and a control portion, configured to control a spraying operation onto the workpiece by the dispenser. The control portion is configured to control so as to spray the sealing resin onto a region excluding a predetermined neighboring region of the guard frame in the workpiece, and thereafter or before that, to spray the sealing resin onto the predetermined neighboring region of the guard frame.

According to this, even when a configuration is adopted in which sealing resin is sprayed onto the exposed part of the workpiece while holding a frame-shaped guard frame on the upper surface of the workpiece, it is possible to prevent a shortage of resin amount from occurring at the outer peripheral portion of the molded product. Further, it is possible to prevent the resin flow at the outer peripheral portion from becoming larger compared to the central portion.

Further, it is preferable that the control portion is configured to control so as to spray the sealing resin in a continuous or intermittent linear manner by reciprocating the dispenser relatively in a predetermined first direction with respect to the workpiece while linearly moving a predetermined distance in a second direction orthogonal to the first direction each time an end point of an outward path and an end point of a return path are reached, when spraying the sealing resin onto a region excluding the predetermined neighboring region of the guard frame.

Further, it is preferable that the control portion is configured to control so as to linearly move the dispenser relatively in the second direction with respect to the workpiece and spray the sealing resin linearly onto a neighboring region of an inner wall surface parallel to the second direction, when spraying the sealing resin onto the predetermined neighboring region of the guard frame.

Further, it is preferable that the control portion is configured to control so as to calculate a duplicate volume between the guard frame and a region to be resin sealed for each inner wall surface and spray the sealing resin in an amount obtained by multiplying the duplicate volume, a resin specific gravity of the sealing resin, and a setting coefficient, when spraying the sealing resin onto the predetermined neighboring region of the guard frame.

Further, a compression molding method according to one embodiment is a compression molding method that seals a workpiece with sealing resin and processes the workpiece into a molded product, and the compression molding method includes: a resin spraying process of holding a frame-like guard frame on an upper surface of the workpiece and spraying the sealing resin onto an upper surface of the workpiece exposed within a frame of the guard frame. The resin spraying process has a first spraying process of spraying the sealing resin onto a region excluding a predetermined neighboring region of the guard frame in the workpiece, and a second spraying process of spraying the sealing resin onto the predetermined neighboring region of the guard frame after or before the first spraying process.

Further, it is preferable that the first spraying process has a process of spraying the sealing resin in a continuous or intermittent linear manner by reciprocating a dispenser relatively in a predetermined first direction with respect to the workpiece while linearly moving a predetermined distance in a second direction orthogonal to the first direction each time an end point of an outward path and an end point of a return path are reached.

Further, it is preferable that the second spraying process has a process of linearly moving the dispenser relatively in the second direction with respect to the workpiece and spraying the sealing resin linearly onto a neighboring region of an inner wall surface parallel to the second direction.

Further, it is preferable that the second spraying process has a process of calculating a duplicate volume between the predetermined guard frame and a region to be resin sealed for each inner wall surface, and spraying the sealing resin in an amount obtained by multiplying the duplicate volume, a resin specific gravity of the sealing resin, and a setting coefficient.

### Effects of Invention

According to the present invention, it is possible to prevent a shortage of resin amount from occurring in an outer peripheral portion of a molded product. Further, it is possible to prevent the resin flow at the outer peripheral portion from becoming larger compared to the central portion. Thus, it is possible to prevent molding defects caused by insufficient resin amount or resin flow from occurring.

### BRIEF DESCRIPTION OF THE DRAWINGS

[FIG. 1] FIG. 1 is a plan view showing an example of a compression molding device according to an embodiment of the present invention.
[FIG. 2] FIGS. 2A to 2C are explanatory diagrams describing a state in which a guard frame is held on an upper surface of a workpiece in the compression molding device of FIG. 1, in which FIG. 2A is a plan view, FIG. 2B is a cross-sectional view, and FIG. 2C is a cross-sectional view describing a duplicate volume between the guard frame and a region to be resin sealed in a molded product.
[FIG. 3] FIG. 3 is an explanatory diagram describing a spraying operation of sealing resin in the compression molding device of FIG. 1.
[FIG. 4] FIG. 4 is a side view showing an example of a press device of the compression molding device of FIG. 1.
[FIG. 5] FIG. 5 is a front cross-sectional view showing an example of a sealing mold of the compression molding device of FIG. 1.
[FIG. 6] FIG. 6 is an explanatory diagram of a compression molding method according to an embodiment of the present invention.
[FIG. 7] FIG. 7 is an explanatory diagram following FIG. 6 (shown at A-A position in FIG. 3).
[FIG. 8] FIG. 8 is an explanatory diagram following FIG. 7.
[FIG. 9] FIG. 9 is an explanatory diagram following FIG. 8.
[FIG. 10] FIG. 10 is an explanatory diagram following FIG. 9.
[FIG. 11] FIG. 11 is an explanatory diagram describing a spraying operation of sealing resin according to a conventional embodiment.
[FIG. 12] FIG. 12 is an explanatory diagram describing a spraying operation of sealing resin according to a conventional embodiment (shown at B-B position in FIG. 11).

### DESCRIPTION OF EMBODIMENTS

### (Overall Configuration)

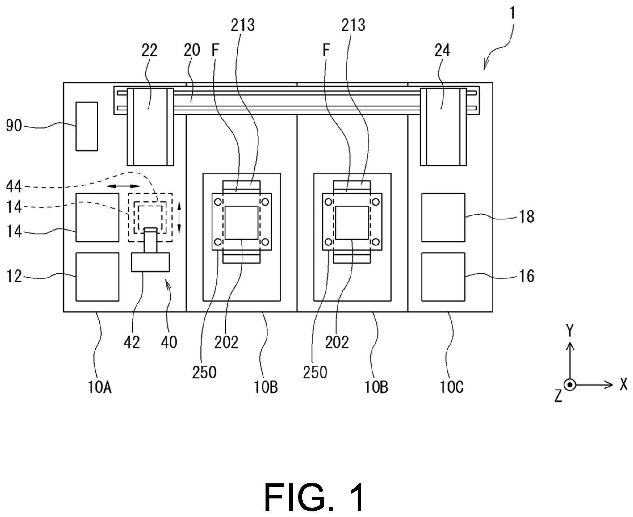

Hereinafter, embodiments of the present invention are described in detail with reference to the drawings. FIG. 1 is a plan view (schematic diagram) showing an example of a compression molding device 1 according to the present embodiment. For convenience of description, arrows in the drawings indicate the left-right direction (X direction), the front-rear direction (Y direction), and the up-down direction (Z direction) of the compression molding device 1. Further, in all drawings for describing each embodiment, members having the same function are denoted by the same reference numerals, and repeated description thereof may be omitted.

The compression molding device 1 according to the present embodiment is a device that includes a sealing mold and performs resin sealing (compression molding) of a workpiece (article to be molded) W using sealing resin R.

First, the workpiece W to be molded includes a configuration in which electronic components are mounted on a base material. More specifically, examples of the base material include plate-shaped members such as resin substrates, ceramics substrates, metal substrates, carrier plates, lead frames, and wafers. Further, examples of the electronic components include semiconductor chips, MEMS chips, passive elements, heat dissipation plates, conductive members, and spacers. The shape of the base material is rectangular (strip-shaped), square, circular, or the like. Further, the number of electronic components mounted on one base material is set to one or multiple (for example, in a matrix pattern or the like).

Examples of methods for mounting electronic components on a base material include methods using wire bonding mounting, flip chip mounting, and the like. Alternatively, in the case of a configuration in which the base material (a carrier plate made of glass or metal) is peeled from the molded product Wp after resin sealing, there is also a method of attaching electronic components using an adhesive tape having thermal peelability or an ultraviolet curable resin that cures by ultraviolet irradiation.

On the other hand, as an example of the sealing resin R, granular thermosetting resin (for example, filler-containing epoxy-based resin or the like) is used. The sealing resin R is not limited to the above granular resin, and may be powder resin (powdery resin), crusite resin, solid resin, liquid resin, or a resin combining multiple of these, or the like, and may be a resin other than epoxy-based thermosetting resin.

Further, as an example of the film F, a film material excellent in heat resistance, ease of peeling, flexibility, and extensibility is preferably used, for example, PTFE (polytetrafluoroethylene), ETFE (polytetrafluoroethylene polymer), PET, FEP, fluorine-impregnated glass cloth, polypropylene, polyvinylidene chloride, and the like.

Next, an overview of the compression molding device 1 according to the present embodiment will be described. As shown in FIG. 1, the compression molding device 1 includes, as main components, a supply unit 10A that performs supply of the workpiece W and the sealing resin R and the like, a press unit 10B that performs resin sealing of the workpiece W and processing into the molded product Wp and the like, and a storage unit 10C that performs storage of the molded product Wp and the like. As an example, the supply unit 10A, the press unit 10B, and the storage unit 10C are arranged in this order along the X direction in FIG. 1. However, the configuration is not limited to the above, and the equipment configuration within the units, the number of units, the arrangement order of the units, and the like may be changed. For example, the supply unit 10A and the storage unit 10C may be arranged in mutually opposite positions in the X direction, or may be arranged in a consolidated manner at either one of the positions (not shown). Further, a configuration including units other than the above may also be adopted (not shown).

Further, in the compression molding device 1, a guide rail 20 is provided linearly across the units, and a transport device (first loader) 22 that transports the workpiece W and the sealing resin R (may also be used for transporting the molded product Wp), as well as a transport device (second loader) 24 that transports the molded product Wp (may also be used for transporting the workpiece W and the sealing resin R), are provided movably between predetermined units along the guide rail 20. However, the configuration is not limited to the above, and a configuration including a common (single) transport device (loader) that transports the workpiece W, the sealing resin R, and the molded product Wp may also be adopted (not shown). Further, the transport device may be configured to include a robot hand or the like instead of a loader.

Further, in the compression molding device 1, a control portion 90 that performs operation control of each mechanism in each unit and the like is arranged in the supply unit 10A (a configuration in which it is arranged in other units may also be adopted).

### (Supply Unit)

Next, the supply unit 10A included in the compression molding device 1 will be described.

The supply unit 10A includes, as an example, a stocker 12 used for storing the workpiece W, and a table 14 on which the workpiece W is placed and moved. The stocker 12 uses a known stack magazine, slit magazine, or the like, and is capable of storing multiple workpieces W collectively.

With this configuration, the workpiece W is taken out from the stocker 12 using a known pusher or the like (not shown) and placed on the table 14 (one or multiple depending on the configuration of the workpiece W). Next, the table 14 on which the workpiece W is placed moves to the resin supply portion 40 described later.

The supply unit 10A or the like may be configured to include an inspection mechanism that performs visual inspection of the workpiece W, a workpiece heater that performs preheating of the workpiece W, or the like (none of which are shown).

Further, the supply unit 10A includes a resin supply portion 40 that supplies the sealing resin R. The resin supply portion 40 according to the present embodiment includes a dispenser 42 that sprays the sealing resin (as an example, granular resin) R, and a guard frame 44 that has a frame-shaped with a predetermined thickness and is held on the upper surface of the workpiece W (specifically, the plate-shaped member constituting the above-mentioned base material). The guard frame 44 is formed using a metal material or a resin material.

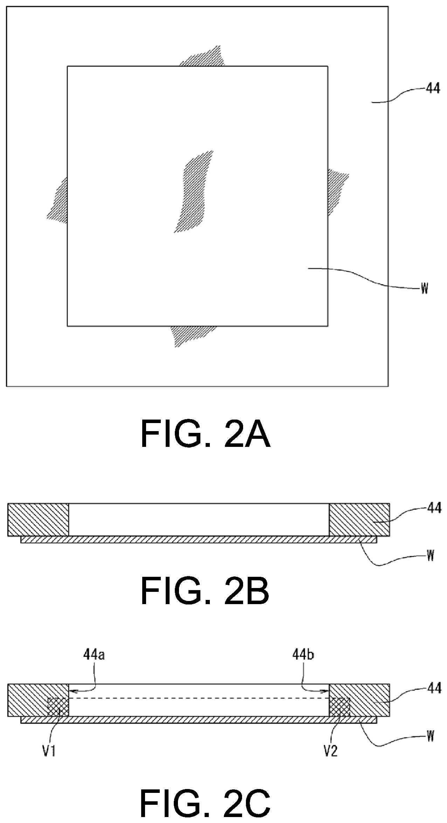

With this configuration, the guard frame 44 is held at a predetermined position on the upper surface of the workpiece W (the above-mentioned plate-shaped member) placed on the table 14 (a plan view of this held state is shown in FIG. 2A, and a cross-sectional view is shown in FIG. 2B, but the electronic components are omitted from the illustration for ease of understanding the configuration). Next, a set amount of the sealing resin R is supplied (sprayed) from the dispenser 42 onto the upper surface of the workpiece W exposed within the frame of the guard frame 44. Next, the workpiece W with the sealing resin R loaded thereon is transported to the press unit 10B using the first loader 22 or the like. At this time, since the sealing resin R is in a state surrounded by the guard frame 44, scattering of the sealing resin R may be prevented.

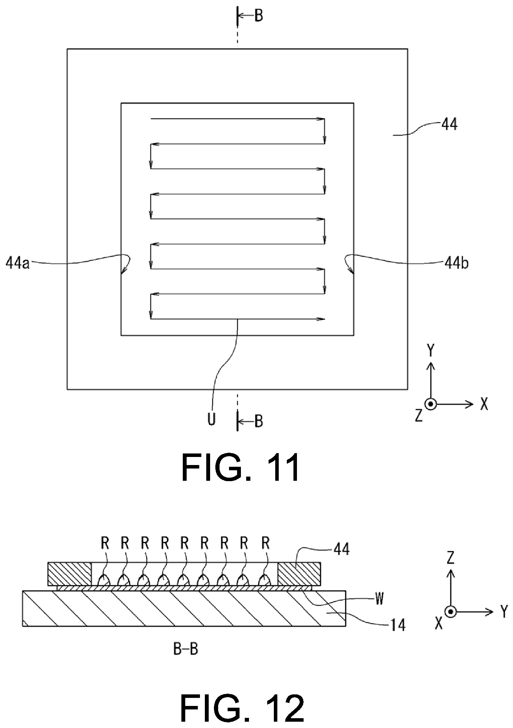

Here, an example of a conventional spraying operation is shown in FIG. 11 (plan view) and FIG. 12 (cross-sectional view). The arrow U in the figures represents the spraying path of the sealing resin R. As described above, when spraying the sealing resin R with the guard frame 44 held on the upper surface of the workpiece W, it is necessary to spray in a region smaller than (inside of) the molded product size, so that insufficient resin amount tends to occur at the outer peripheral portion of the molded product, and also, the resin flow at the outer peripheral portion becomes larger compared to the central portion, both of which have been causes of molding defects (deterioration of flatness, etc.). In particular, as shown in FIG. 12, the occurrence of locations where the sealing resin R is present and locations where it is absent (spaces) has been a cause of deterioration of flatness after molding in the neighboring region of the guard frame 44 (in this case, the neighboring region of the inner wall surfaces 44a and 44b).

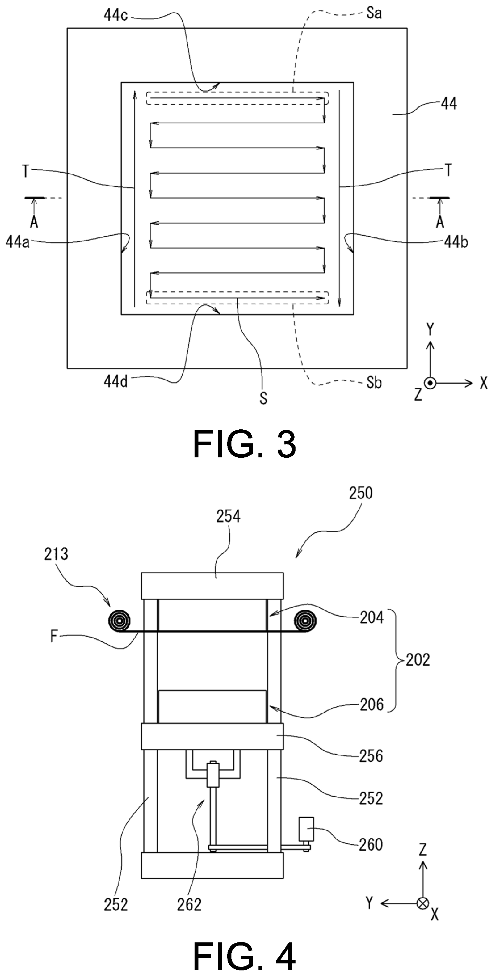

In order to solve the above problems, in the present invention, a control example of the spraying operation of the sealing resin R performed by the control portion 90 is described with reference to FIG. 3. Specifically, first, control is performed to spray the sealing resin R on a region of the workpiece W (the above-mentioned exposed part) excluding a predetermined neighboring region of the guard frame (in this embodiment, the neighboring region of the inner wall surfaces 44a and 44b orthogonal to a first direction described later) (first spraying process). In this first spraying process, as an example, the dispenser 42 (or the table 14, or both) is reciprocatingly moved in a predetermined first direction (for example, a direction parallel to the X direction), and each time the end point of the outward path and the end point of the return path are reached, the dispenser 42 is linearly moved a predetermined distance in a second direction (for example, a direction parallel to the Y direction) orthogonal to the first direction, thereby spraying the sealing resin R in a continuous linear shape (so-called single-stroke shape) (arrow S in FIG. 3). However, the shape is not limited to a continuous linear shape, and may be an intermittent linear shape with interrupted portions in the middle. Furthermore, instead of a linear shape by reciprocating movement, a linear shape by unidirectional movement, a linear shape by rotational movement (so-called spiral shape), or the like may be used (not shown).

Next, control is performed to spray the sealing resin R on a predetermined neighboring region of the guard frame (the neighboring region of the inner wall surfaces 44a and 44b) of the workpiece W (the above-mentioned exposed part) (second spraying process). In this second spraying process, as an example, the dispenser 42 (or the table 14, or both) is linearly moved in the above-mentioned second direction, and the sealing resin R is sprayed in a continuous (or intermittent) linear shape in the neighboring region of the inner wall surfaces 44a and 44b parallel to the second direction (arrow T in FIG. 3). The order of performing the first spraying process and the second spraying process may be reversed.

When performing the above-mentioned second spraying process, the control portion 90 calculates the duplicate volume between the guard frame 44 and the region to be resin sealed (the dashed line portion in FIG. 2C) for each inner wall surface (specifically, for each of the inner wall surface 44a and the inner wall surface 44b). Next, control is performed to spray the sealing resin R in an amount obtained by multiplying the calculated duplicate volume, the resin specific gravity s of the sealing resin R to be used, and the setting coefficient k (appropriately set in a range of approximately k=0.5 to 1.0). In the example of this embodiment, for the inner wall surface 44a, the duplicate volume is V1 in FIG. 2C, and the resin amount M1 of the sealing resin R to be sprayed is M1=V1×s×k. Similarly, for the inner wall surface 44b, the duplicate volume is V2 in FIG. 2C, and the resin amount M2 of the sealing resin R to be sprayed is M2=V2×s×k. In the case where V1=V2 is set (designed), the above resin amount may be calculated for only one of the inner wall surfaces and applied as the same amount to the other opposing inner wall surface.

According to the configuration described above, the above-mentioned problem may be solved. That is, the problem in the configuration in which the sealing resin R is sprayed on the exposed part of the workpiece W while holding the frame-shaped guard frame 44 on the upper surface of the workpiece W may be solved. Specifically, it is possible to prevent the resin amount from becoming insufficient at the outer peripheral portion of the molded product Wp. Further, it is possible to prevent the resin flow from becoming larger at the outer peripheral portion compared to the central portion. Thus, it is possible to prevent molding defects (particularly, deterioration of flatness) caused by insufficient resin amount or resin flow.

As another example, in the neighboring region of the guard frame in the dashed line region in FIG. 3, that is, the start end region Sa and the terminal region Sb of the arrow S (the neighboring region of the inner wall surfaces 44c and 44d parallel to the first direction), the above-mentioned problem may also be solved by relatively slowing the movement speed of the dispenser 42 when spraying the sealing resin R. This is because the spraying amount (supply amount) of the sealing resin R in the relevant region may be relatively increased.

### (Press Unit)

Next, the press unit 10B included in the compression molding device 1 will be described.

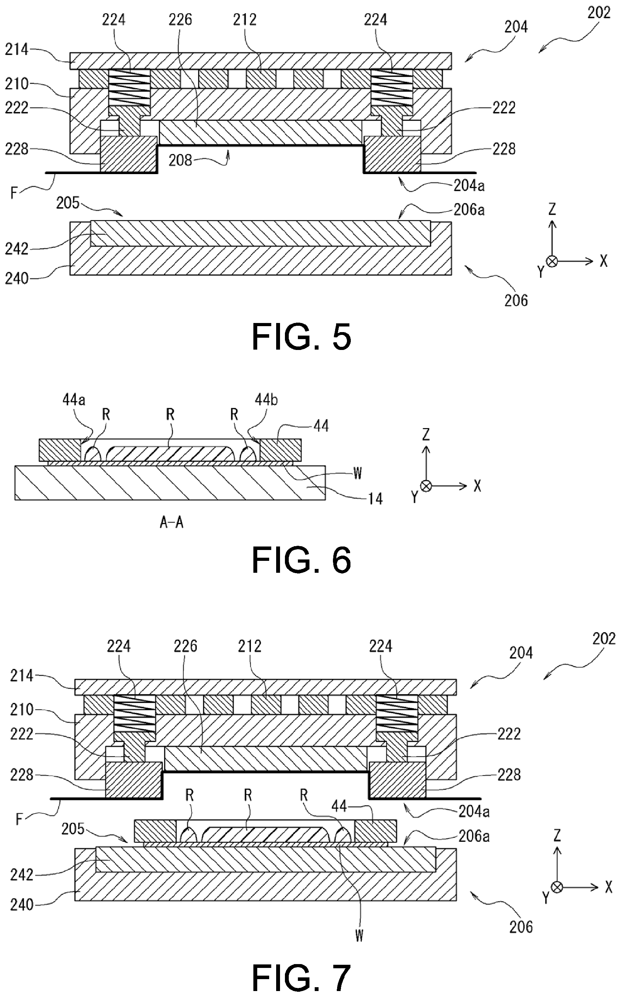

The press unit 10B includes a sealing mold 202 having a pair of molds that are opened and closed (for example, multiple mold blocks made of alloy tool steel, mold plates, mold pillars, and other members assembled together). Further, a press device 250 that drives the sealing mold 202 to open and close to perform resin sealing of the workpiece W is provided. As an example, a configuration including two press devices 250 is adopted, but a configuration including one or three or more press devices may also be adopted (not shown). A side view (schematic diagram) of the press device 250 provided in the press unit 10B is shown in FIG. 4, and a front cross-sectional view (schematic diagram) of the sealing mold 202 is shown in FIG. 5.

Here, as shown in FIG. 4, the press device 250 is configured to include a pair of platens 254 and 256, multiple tie bars 252 on which the pair of platens 254 and 256 are installed, and a drive device that moves (raises and lowers) the platen 256. Specifically, the drive device is configured to include a drive source (for example, an electric motor) 260 and a drive transmission mechanism (for example, a ball screw or a toggle link mechanism) 262 (however, the configuration is not limited thereto). In the present embodiment, the platen 254 on the upper side in the vertical direction is set as a fixed platen (a platen fixed to the tie bars 252), and the platen 256 on the lower side is set as a movable platen (a platen slidably held by the tie bars 252 and raised and lowered). However, the configuration is not limited thereto, and the configuration may be reversed vertically, that is, the upper side may be set as a movable platen and the lower side may be set as a fixed platen, or both the upper side and the lower side may be set as movable platens (none of which are shown).

On the other hand, as shown in FIG. 5, the sealing mold 202 includes, as a pair of molds disposed between the pair of platens 254 and 256 in the press device 250, an upper mold 204 on the upper side in the vertical direction and a lower mold 206 on the lower side. That is, the upper mold 204 is assembled to the platen on the upper side (in the present embodiment, the fixed platen 254), and the lower mold 206 is assembled to the platen on the lower side (in the present embodiment, the movable platen 256). The upper mold 204 and the lower mold 206 approach and separate from each other to perform mold closing and mold opening (the vertical direction (up-down direction) is the mold opening and closing direction).

Further, in the present embodiment, as an example, a film supply portion 213 that transports (supplies) the roll-shaped film F to the inside of the sealing mold 202 is provided. The film F may be used in a strip shape instead of a roll shape depending on the configuration of the workpiece W.

Next, the upper mold 204 of the sealing mold 202 will be described in detail. As shown in FIG. 5, the upper mold 204 includes an upper mold chase 210, and a cavity piece 226 and a clamper 228 held by the upper mold chase 210. The upper mold chase 210 is fixed to the lower surface of a support plate 214 via a support pillar 212. A cavity 208 is provided on the lower surface of the upper mold 204 (the surface on the lower mold 206 side).

The clamper 228 is configured in an annular shape so as to surround the cavity piece 226 and is assembled to be vertically movable while being spaced apart (floating) from the lower surface of the support plate 214 via a push pin 222 and a clamper spring (for example, a biasing member exemplified by a coil spring) 224 (however, the assembly structure is not limited to this). The cavity piece 226 constitutes the inner part (bottom) of the cavity 208, and the clamper 228 constitutes the side part of the cavity 208. The shape and number of the cavities 208 provided in one upper mold 204 are appropriately set according to the shape and number of the workpieces W (one or multiple).

Further, suction paths (holes, grooves, etc.) communicating with a suction device are provided on the lower surface of the clamper 228, at the boundary between the clamper 228 and the cavity piece 226, and the like (not shown). This allows the film F supplied from the film supply portion 213 to be adsorbed and held on the mold surface 204a including the inner surface of the cavity 208. Further, degassing inside the cavity 208 may be performed when mold closing is performed to carry out resin sealing.

Further, in the present embodiment, an upper mold heating mechanism (not shown) that heats the upper mold 204 to a predetermined temperature is provided. This upper mold heating mechanism includes a heater (for example, an electric wire heater), a temperature sensor, a power source, and the like, and heating control is performed by the control portion 90. As an example, the heater is built into the upper mold chase 210 and is configured to apply heat to the entire upper mold 204 and the sealing resin R accommodated in the cavity 208. The upper mold 204 is heated by the heater to a predetermined temperature (for example, 100°C to 300°C).

Next, the lower mold 206 of the sealing mold 202 will be described in detail. As shown in FIG. 5, the lower mold 206 includes a lower mold chase 240, and a lower plate 242 held by the lower mold chase 240.

Further, in the present embodiment, a workpiece holding portion 205 that holds the workpiece W at a predetermined position on the upper surface of the lower plate 242 is provided. As an example, this workpiece holding portion 205 includes a workpiece guide pin (not shown) and has a suction path (holes, grooves, etc.) disposed penetrating through the lower plate 242 and communicating with a suction device (not shown). Specifically, one end of the suction path communicates with the mold surface 206a of the lower mold 206, and the other end is connected to a suction device disposed outside the lower mold 206. This makes it possible to drive the suction device to suction the workpiece W from the suction path and to adsorb and hold the workpiece W on the mold surface 206a (here, the upper surface of the lower plate 242). Instead of the above suction holding mechanism, or together with the suction holding mechanism, a configuration including holding claws that clamp the outer periphery of the workpiece W may be adopted (not shown). The shape and number of the workpiece holding portions 205 provided in one lower mold 206 are appropriately set according to the shape and number of the workpieces W (one or multiple).

Further, in the present embodiment, a lower mold heating mechanism (not shown) that heats the lower mold 206 to a predetermined temperature is provided. This lower mold heating mechanism includes a heater (for example, an electric wire heater), a temperature sensor, a power source, and the like, and heating control is performed by the control portion 90. As an example, the heater is built into the lower mold chase 240 and is configured to apply heat to the entire lower mold 206 and the workpiece W held by the workpiece holding portion 205. The lower mold 206 is heated by the heater to a predetermined temperature (for example, 100°C to 300°C).

### (Storage Unit)

Next, the storage unit 10C included in the compression molding device 1 will be described.

As an example, the storage unit 10C includes a table 18 on which the molded product Wp is placed, and a stocker 16 used for storing the molded product Wp. For the stocker 16, a known stack magazine, slit magazine, or the like is used, and multiple molded products Wp may be stored collectively.

With this configuration, the molded product Wp transported from the press unit 10B using the second loader 24 or the like is placed on the table 18. Then, the molded product Wp is stored in the stocker 16 using a known pusher or the like (not shown).

The storage unit 10C or the like may be configured to include a molded product heater that performs post-curing of the molded product Wp, an inspection mechanism that performs visual inspection of the molded product Wp, and the like (all not shown).

### (Resin Sealing Operation)

Next, the operation of performing resin sealing using the compression molding device 1 according to the present embodiment (that is, the compression molding method according to the present embodiment) will be described.

First, a preparation process is performed. The preparation process includes the following processes. A heating process (upper mold heating process) is performed in which the upper mold 204 is adjusted to a predetermined temperature (for example, 100°C to 300°C) and heated by the upper mold heating mechanism. Further, a heating process (lower mold heating process) is performed in which the lower mold 206 is adjusted to a predetermined temperature (for example, 100°C to 300°C) and heated by the lower mold heating mechanism. Further, a film supply process is performed in which the film supply portion 213 is operated to supply a new film F and adsorb the film F so as to cover a predetermined region of the mold surface 204a including the inner surface of the cavity 208 in the upper mold 204.

After the preparation process, as shown in FIG. 6, a workpiece supply process is performed in which the workpieces W are carried out one by one from the stocker 12 and placed on the table 14. Next, a guard frame holding process is performed in which a frame-shaped guard frame 44 is held on the upper surface of the workpiece W (specifically, the plate-shaped member constituting the aforementioned base material). Next, a resin spraying process is performed in which the sealing resin R is sprayed on the upper surface of the workpiece W exposed within the frame of the guard frame 44.

The resin spraying process according to the present embodiment includes a first spraying process in which the sealing resin R is sprayed on a region of the upper surface of the workpiece W excluding a predetermined neighboring region of the guard frame (in the present embodiment, the neighboring region of the inner wall surfaces 44a and 44b orthogonal to the first direction). Further, the resin spraying process includes a second spraying process in which the sealing resin R is sprayed on the predetermined neighboring region of the guard frame (the neighboring region of the inner wall surfaces 44a and 44b) on the upper surface of the workpiece W.

As an example of the first spraying process, the dispenser 42 (or the table 14, or both) is reciprocatingly moved in a predetermined first direction (for example, a direction parallel to the X direction), and each time the end point of the outward path and the end point of the return path are reached, the dispenser 42 is linearly moved a predetermined distance in a second direction (for example, a direction parallel to the Y direction) orthogonal to the first direction, and the sealing resin R is sprayed in a continuous linear shape (a so-called single-stroke shape) (arrow S in FIG. 3). However, the shape is not limited to a continuous linear shape and may be an intermittent linear shape with interrupted portions in the middle. Furthermore, instead of a linear shape by reciprocating movement, a linear shape by unidirectional movement, a linear shape by rotational movement (so-called spiral shape), or the like may be used (not shown).

As described above, as another example of the first spraying process, in the neighboring region of the guard frame (the neighboring region of the inner wall surfaces 44c and 44d parallel to the first direction) that becomes the start end region Sa and the terminal region Sb of the arrow S, the spraying amount (supply amount) of the sealing resin R in the region may be relatively increased by relatively slowing the movement speed of the dispenser 42.

As an example of the second spraying process, the dispenser 42 (or the table 14, or both) is linearly moved in the above-mentioned second direction, and the sealing resin R is sprayed in a continuous (or intermittent) linear shape in the neighboring region of the inner wall surfaces 44a and 44b parallel to the second direction (arrow T in FIG. 3). The order of performing the first spraying process and the second spraying process may be reversed.

When performing the above-mentioned second spraying process, first, the duplicate volume between the guard frame 44 and the region to be resin sealed (the dashed line portion in FIG. 2C) is calculated for each inner wall surface (specifically, for each of the inner wall surface 44a and the inner wall surface 44b). Next, the sealing resin R is sprayed in an amount obtained by multiplying the calculated duplicate volume, the resin specific gravity s of the sealing resin R to be used, and the setting coefficient k (appropriately set in a range of approximately k=0.5 to 1.0). In the example of this embodiment, for the inner wall surface 44a, the duplicate volume is V1 in FIG. 2C, and the resin amount M1 of the sealing resin R to be sprayed is M1=V1×s×k. Similarly, for the inner wall surface 44b, the duplicate volume is V2 in FIG. 2C, and the resin amount M2 of the sealing resin R to be sprayed is M2=V2×s×k. In the case where V1=V2 is set (designed), the above resin amount may be calculated for only one of the inner wall surfaces and applied as the same amount to the other opposing inner wall surface.

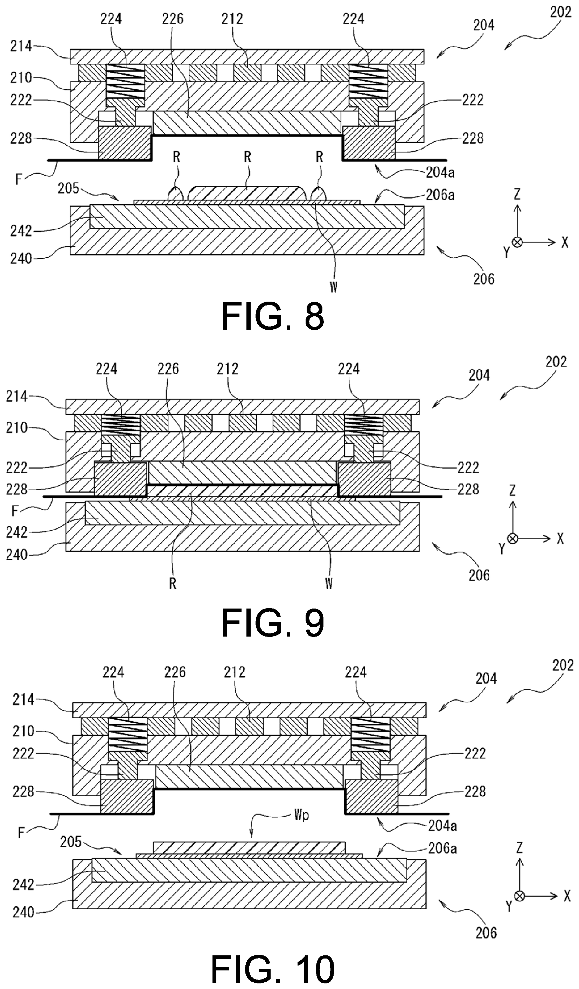

After the resin spraying process, a setting process is performed in which the workpiece W with the guard frame 44 held thereon (in a state where the sealing resin R is loaded within the frame of the guard frame 44) is carried into the sealing mold 202 by a transport device (for example, the first loader 22 or the like) and set at a predetermined position (specifically, on the workpiece holding portion 205 of the lower mold 206) (see FIG. 7). Next, a process is performed in which the guard frame 44 is removed from the upper surface of the workpiece W by a transport device (for example, the first loader 22 or the like) and carried out of the sealing mold 202 (see FIG. 8). The guard frame 44 is transported to the supply unit 10A and repeatedly used in other (subsequent) guard frame holding processes.

After performing all of the above processes, a resin sealing process is performed in which the workpiece W is sealed with the sealing resin R and processed into a molded product Wp. Specifically, a mold closing process is performed in which the sealing mold 202 is closed, the cavity piece 226 is relatively lowered within the cavity 208, and the sealing resin R is heated and pressurized against the workpiece W (see FIG. 9). As a result, the sealing resin R is thermally cured, the resin sealing (compression molding) is completed, and the molded product Wp is formed.

After the mold closing process, a mold opening process is performed in which the sealing mold 202 is opened, the molded product Wp and the used film F are separated, and the molded product Wp may be taken out (see FIG. 10). Next, a molded product carrying-out process is performed in which the molded product Wp is carried out from inside the sealing mold 202 by a transport device (for example, the second loader 24 or the like) and transported to the storage unit 10C.

After the molded product carrying-out process, or in parallel therewith, a film supply process is performed in which the film supply portion 213 is operated to send out the used film F from inside the sealing mold 202 and send in and set a new film F into the sealing mold 202.

After the film supply process, or in parallel therewith, a molded product storage process is performed. Specifically, a process is performed in which the molded product Wp is placed on the table 18 by a transport device (for example, the second loader 24 or the like) (a known pickup mechanism or the like may also be used in combination). Next, a process is performed in which the molded products Wp are carried into the stocker 16 one by one by a known pusher or the like (not shown). Before these processes, a process of performing post-curing of the molded product Wp or the like may be performed.

The above are the main processes of the compression molding method performed using the compression molding device 1. By including such processes, the aforementioned problems may be solved. The above process order is an example, and the order may be changed or processes may be performed in parallel as long as there is no hindrance.

As described above, according to the compression molding device and the compression molding method according to the present invention, it is possible to prevent insufficient resin amount from occurring in the outer peripheral portion of the molded product. Further, it is possible to prevent the resin flow at the outer peripheral portion from becoming larger compared to the central portion. Thus, it is possible to prevent molding defects (particularly, deterioration of flatness) caused by insufficient resin amount or resin flow.

The present invention is not limited to the above embodiments, and various modifications are possible without departing from the present invention.

## Claims

1. A compression molding device that seals a workpiece with sealing resin and processes the workpiece into a molded product, the compression molding device comprising:
a guard frame, having a frame-shaped and held at a predetermined position on an upper surface of the workpiece;
a dispenser, configured to spray the sealing resin onto an upper surface of the workpiece exposed within a frame of the guard frame; and
a control portion, configured to control a spraying operation onto the workpiece by the dispenser,
wherein the control portion is configured to control so as to spray the sealing resin onto a region excluding a predetermined neighboring region of the guard frame in the workpiece, and thereafter or before that, to spray the sealing resin onto the predetermined neighboring region of the guard frame.

2. The compression molding device according to claim 1, wherein the control portion is configured to control so as to spray the sealing resin in a continuous or intermittent linear manner by reciprocating the dispenser relatively in a predetermined first direction with respect to the workpiece while linearly moving a predetermined distance in a second direction orthogonal to the first direction each time an end point of an outward path and an end point of a return path are reached, when spraying the sealing resin onto a region excluding the predetermined neighboring region of the guard frame.

3. The compression molding device according to claim 2, wherein the control portion is configured to control so as to linearly move the dispenser relatively in the second direction with respect to the workpiece and spray the sealing resin linearly onto a neighboring region of an inner wall surface parallel to the second direction, when spraying the sealing resin onto the predetermined neighboring region of the guard frame.

4. The compression molding device according to claim 3, wherein the control portion is configured to control so as to calculate a duplicate volume between the guard frame and a region to be resin sealed for each inner wall surface and spray the sealing resin in an amount obtained by multiplying the duplicate volume, a resin specific gravity of the sealing resin, and a setting coefficient, when spraying the sealing resin onto the predetermined neighboring region of the guard frame.

5. A compression molding method that seals a workpiece with sealing resin and processes the workpiece into a molded product, the compression molding method comprising:
a resin spraying process of holding a frame-like guard frame on an upper surface of the workpiece and spraying the sealing resin onto an upper surface of the workpiece exposed within a frame of the guard frame,
wherein the resin spraying process has a first spraying process of spraying the sealing resin onto a region excluding a predetermined neighboring region of the guard frame in the workpiece, and a second spraying process of spraying the sealing resin onto the predetermined neighboring region of the guard frame after or before the first spraying process.

6. The compression molding method according to claim 5, wherein the first spraying process has a process of spraying the sealing resin in a continuous or intermittent linear manner by reciprocating a dispenser relatively in a predetermined first direction with respect to the workpiece while linearly moving a predetermined distance in a second direction orthogonal to the first direction each time an end point of an outward path and an end point of a return path are reached.

7. The compression molding method according to claim 6, wherein the second spraying process has a process of linearly moving the dispenser relatively in the second direction with respect to the workpiece and spraying the sealing resin linearly onto a neighboring region of an inner wall surface parallel to the second direction.

8. The compression molding method according to claim 7, wherein the second spraying process has a process of calculating a duplicate volume between the guard frame and a region to be resin sealed for each inner wall surface, and spraying the sealing resin in an amount obtained by multiplying the duplicate volume, a resin specific gravity of the sealing resin, and a setting coefficient.
